# EUROPÄISCHE PATENTSCHRIFT

(11) **EP 0 568 660 B1**
(45) Veröffentlichungstag und Bekanntmachung des Hinweises auf die Patenterteilung: **08.05.1996**
(21) Anmeldenummer: 92921523.4
(22) Anmeldetag: 21.10.1992
(51) Int. Cl.: B23Q 3/10

(54) **ELEMENTSYSTEM, INSBESONDERE ZUM SPANNEN VON WERKSTÜCKEN**
COMPONENT SYSTEM, ESPECIALLY FOR CLAMPING WORKPIECES
SYSTEME D'ELEMENTS UTILISABLES EN PARTICULIER POUR LE SERRAGE DE PIECES A USINER

(30) Priorität: 02.12.1991 DE 4139669
(43) Veröffentlichungstag der Anmeldung: 10.11.1993
(73) Patentinhaber: WIEMERS, Jorg, D-33161 Hövelhof (DE); WIEMERS, Frank, D-33161 Hövelhof (DE)
(72) Erfinder: WIEMERS, Jorg, D-33161 Hövelhof (DE); WIEMERS, Frank, D-33161 Hövelhof (DE)
(74) Vertreter: Patentanwälte Dipl.-Ing. Bodo Thielking Dipl.-Ing. Otto Elbertzhagen
(86) Internationale Anmeldenummer: EP9202411
(87) Internationale Veröffentlichungsnummer: WO9310940

(56) Entgegenhaltungen:
- DE-A- 3 237 705
- DE-A- 3 402 260
- DE-A- 3 407 003
- DE-A- 3 503 008
- FR-A- 2 351 755
- GB-A- 852 792
- US-A- 2 676 413

## Beschreibung

Die Erfindung betrifft ein Elementsystem nach dem Oberbegriff des Anspruchs 1.

### STAND DER TECHNIK

Bei einer bekannten Vorrichtung dieser Art weist die Vorrichtungsgrundplatte sich kreuzende, rasterförmig angeordnete T-Nuten auf, welche zur Aufnahme eines T-Nutensteins mit Innengewinde dienen. Der nach oben weisende, eingeschnürte Bereich der T-Nut ist nicht nur zum Schraubendurchgang bestimmt, sondern gleichzeitig als Paßnut ausgebildet. Das auf der Auflagefläche der Vorrichtungsgrundplatte aufliegende Spannteil besitzt an seiner unteren Auflagefläche eine zu der erstgenannten T-Nut spiegelbildlich angeordnete T-Nut. In die nebeneinanderliegenden, fluchtenden T-Nuten wird ein paßgenauer Doppel-T-Nutenstein eingelegt. Der Doppel-T-Nutenstein ist geteilt ausgebildet und die Teile werden durch eine gemeinsame Verbindungsschraube zusammengezogen. Die Stabilität dieser Verbindung wird im wesentlichen von der Festigkeit der Schraubenverbindung bestimmt. Dabei muß der Doppel-T-Nutenstein als Paß- und Spannelement die Schubkräfte in X- oder Y-Richtung aufnehmen. Je mehr Verbindungen dieser Art in einem Vorrichtungsaufbau enthalten sind, desto größer sind die Genauigkeitsfehler und Stabilitätseinbußen. Ein weiterer wesentlicher Nachteil der bekannten Vorrichtung liegt darin, daß für die Zugänglichkeit der Verbindungselemente Bohrungen und Nuten erforderlich sind, welche ausschließlich zur Befestigung der Vorrichtungsteile untereinander dienen. Die so aufgebauten Werkstück- oder Vorrichtungsträger sind wegen der notwendig vorgesehenen Aussparungen in ihrer Verwendbarkeit beschränkt.

Es ist ferner eine Spannvorrichtung für Werkzeugmaschinen bekannt (DE-PS 34 07 003), bei der die Festigkeit der Verbindung zwischen Grundteil und Spannteil oder zwischen den Elementen untereinander nicht über Schrauben bestimmt wird. Diese bekannte Vorrichtung besitzt am Grundteil vorgesehene, parallel zueinander verlaufende schwalbenschwanzförmige Nuten in paralleler Anordnung. In diese Schwalbenschwanznuten tauchen schmalere, jedoch in ihrer Anordnung und Form komplementäre schwalbenschwanzförmige Rippen oder Schienen des zugehörigen Gegenstücks ein. Die Winkel der schräg verlaufenden Kanten von Nuten und Schienen sind gleich. Die Nuten sind so breit gewählt, daß die Schienen stets von oben in die Nuten hineingesteckt werden können. Der von der komplementären Schiene freigelassene Raum der entsprechenden Nut wird durch eine Klemmleiste ausgefüllt, um die beiden Teile nach erfolgter Einstellung fest und unverrückbar miteinander zu verbinden. Bei dieser bekannten Lösung wird zwar die Festigkeit der Verbindung zwischen Grundteil und zugehörigem Gegenstück oder Spannteil nicht von der Festigkeit einer Schraubenverbindung bestimmt, es fehlen hier jedoch sich in Z-Richtung erstreckende Referenzflächen. Das Vorsehen geneigt angeordneter Referenzflächen schränkt nicht nur die Flexibilität dieses bekannten Systems im Vergleich zu der vorbekannten Lösung mit Doppel-T-Nutensteinen erheblich ein, das bekannte System mit geneigten Referenzflächen an Schwalbenschwanznuten ist auch vergleichsweise teuer in der Herstellung.

### DIE ERFINDUNG

Ausgehend von diesem Stand der Technik liegt der Erfindung die Aufgabe zugrunde, die Vorteile der unterschiedlichen Systeme miteinander zu vereinigen, ohne deren jeweilige Nachteile aufzuweisen. Das zu schaffende Elementsystem soll eine große Flexibilität in der Positionierung bzw. Lagebestimmung erlauben. Darüber hinaus soll das neue Elementsystem eine schnelle Reproduzierbarkeit bei hoher Stabilität und hoher Wiederholgenauigkeit schaffen, ohne daß hierzu ergänzende Meßmittel oder Messungen erforderlich wären. Das erfindungsgemäße Elementsystem soll dabei eine sichere und zuverlässige Verbindung über formschlüssig zwischen Grundteil und Spannteil eintauchende Verbindungselemente ermöglichen.

Die Lösung dieser Aufgabe erfolgt erfindungsgemäß dadurch, daß an jeder Erhebung jeweils zwei mit Abstand voneinander angeordnete und durch die Hinterschneidung getrennte Referenzflächen mit Abstand übereinander vorgesehen sind.

Bei einer bevorzugten Ausführungsform fluchten die Referenzflächen miteinander.

Weitere bevorzugte Ausgestaltungen der Erfindung sind in den Unteransprüchen beschrieben.

Das Vorsehen von zwei in Z-Richtung gegeneinander versetzten Referenzflächen, die beide hinter der Auflagefläche des Grundteils zurückliegen, hat den Vorteil, daß ein extrem festes Verspannen unter Anlage an den Referenzflächen möglich ist. Dabei wird das Spannteil durch ein Füllstück, beispielsweise ein Keilstück, mit sehr hohem Druck an die Referenzflächen angepreßt. Das Verbindungselement kann dabei parallel zur X-Y-Ebene eingesetzt werden mit der Folge, daß auch hohe Aufbauten in Z- Richtung bei vergleichsweise geringem Platzbedarf im Verbindungsbereich mit dem Grundteil möglich sind. Die symmetrische Anordnung der Referenzflächen zur Hinterschneidung oder Nut garantiert einen optimalen Kraftverlauf zwischen Grundteil und Spannteil. Die erfindungsgemäßen Merkmale erzeugen eine sehr hohe Steifigkeit und Genauigkeit der Verbindung.

### KURZBESCHREIBUNG DER ZEICHNUNGSABBILDUNG

Nachstehend werden bevorzugte Ausführungsformen der Erfindung anhand der Zeichnung im einzelnen beschrieben. Es zeigen:
- Figur 1 -: eine perspektivische Ansicht eines Grundteils,
- Figur 2 -: eine perspektivische Ansicht einer Anordnung verschiedener Spannmittel auf dem Grundteil,
- Figuren 3 bis 8 -: verschiedene Ausführungsformen der im Raster auf dem Grundteil vorgesehenen Erhebungen,
- Figur 9 -: einen Schnitt durch eine besondere Gestaltung der Erhebung,
- Figur 10 -: eine Draufsicht auf die Erhebung gemäß Figur 9,
- Figur 11 -: eine perspektivische Darstellung eines Spannkeils im zusammengesetzten Zustand,
- Figur 12 -: eine Explosionsdarstellung eines anderen Spannkeils,
- Figur 13 -: eine perspektivische Ausführungsform eines anders geformten Spannkeils,
- Figur 14 -: eine perspektivische Ausführungsform eines weiteren Spannkeils,
- Figur 15 -: eine Stirnansicht einer Erhebung am Rande eines Grundteils mit angebautem Zusatzelement, wobei beide Teile über ein speziell geformtes Verbindungselement gekoppelt sind,
- Figur 16 -: eine perspektivische Darstellung des Verbindungselements,
- Figur 17 -: eine Stirnansicht eines Spannteils, das über ein Verbindungselement fixiert ist,
- Figur 18 -: eine perspektivische Darstellung einer weiteren Anordnung,
- Figur 19 -: eine perspektivische Anordnung eines beispielhaft dargestellten weiteren Aufbaus,
- Figur 20 -: eine perspektivische Darstellung eines speziell geformten Grundteils,
- Figur 21 -: eine perspektivische Darstellung eines weiteren beispielhaften Grundteils,
- Figur 22 -: eine perspektivische Darstellung einer Bausituation der beiden Grundteile 20 und 21,
- Figur 23 -: eine Draufsicht auf ein Grundteil mit darauf fixiertem Ergänzungsbauteil.

### BESTER WEG ZUR AUSFÜHRUNG DER ERFINDUNG

In den unterschiedlichen Ausführungsformen sind gleiche oder einander entsprechende Teile jeweils mit gleichen Bezugszeichen versehen. Sie unterscheiden sich bei Bedarf lediglich durch die Zahl der Hochstriche voneinander.

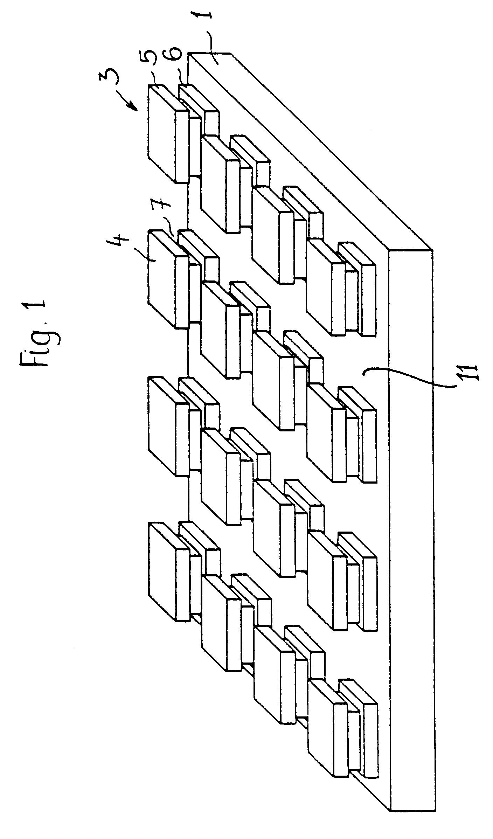

In Figur 1 ist ein insgesamt mit 1 bezeichnetes Grundteil perspektivisch dargestellt. Dieses Grundteil 1 besitzt in einem gleichmäßigen Raster angeordnete Erhebungen 3. Die Erhebungen 3 haben eine in Draufsicht von oben quadratische Grundfläche. An ihrer Oberseite besitzen die Erhebungen Auflageflächen 4. An den Seiten besitzen die Erhebungen zwei Referenzflächen 5 und 6, die an allen vier Seiten vorgesehen sind und die durch eine umlaufende Nut 7 voneinander getrennt sind. Parallel zu der Auflagefläche 4 erstreckt sich zwischen den Erhebungen eine Referenzfläche 11. Die Referenzflächen 5 und 6 dienen als Referenzflächen für Maße in X- und Y-Richtung. Die Referenzfläche 11 dient als Bezugsfläche für Maße in Z-Richtung. Die mit Abstand übereinander angeordneten Referenzflächen 5 und 6 liegen jeweils in gemeinsamen Ebenen.

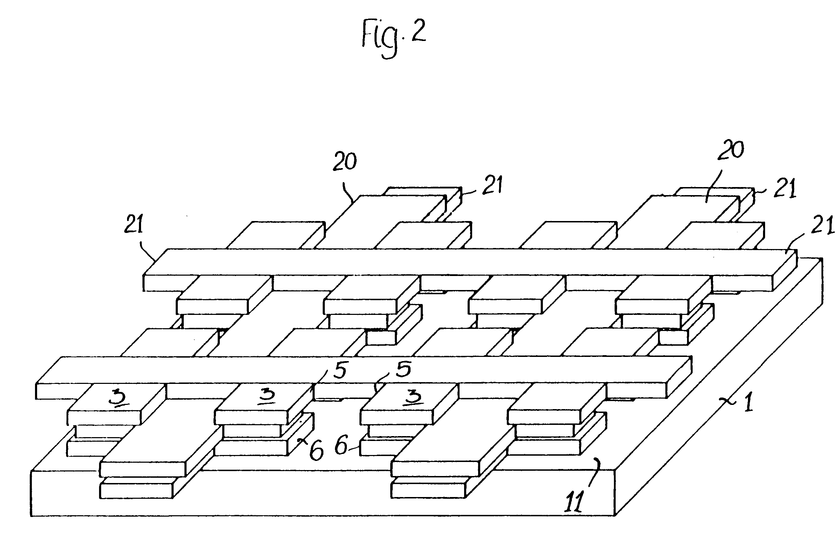

Figur 2 zeigt eine beispielhafte Anordnung von Spannmitteln oder Auflageteilen auf dem Grundteil.

Auf der Referenzfläche 11 des Grundteils liegen parallel zueinander angeordnete Flachstäbe 21, deren seitlicher Flankenabstand dem Abstand der Referenzflächen 6 bzw. 5 benachbarter Erhebungen 3 entsprechen. Auf diesen unteren Flachstäben 21 liegen Flachstäbe 20, deren Breite dem Abstand des Nutgrundes zweier einander gegenüberliegender Nuten 7 der Erhebungen 3 entspricht. Die Dicke des Flachstabs 21 entspricht der Höhe der Referenzfläche 6. Die Dicke des Flachstabs 20 entspricht der Höhe der Nut 7. Quer zu den Flachstäben 21 und 20 sind parallel zueinander zwei weitere Flachstäbe 21 angeordnet, deren Oberfläche bündig liegt mit der Auflagefläche 4 der Erhebungen 3. Die verschiedenen Flachstäbe 20 und 21 können durchgehend miteinander verbohrt werden und sind dann unverrückbar im Grundteil festgelegt.

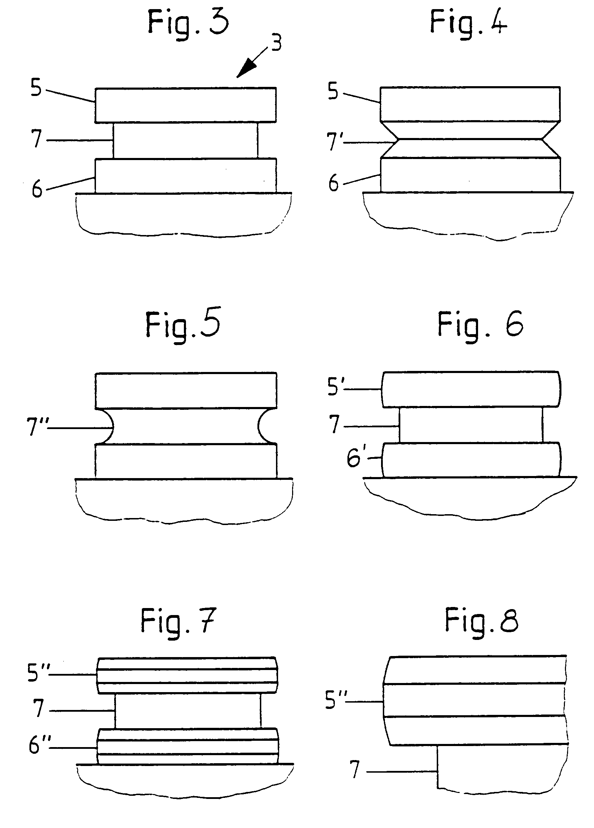

Figuren 3 bis 8 zeigen unterschiedliche Formen und Anordnungen sowohl der Nuten als auch der Referenzflächen. Dabei kann der Grundriß der Erhebungen 3 ebenfalls unterschiedlich sein, beispielsweise rund statt quadratisch. Bei den Ausführungsformen gemäß Figuren 3, 4 und 5 sind die Referenzflächen 5 und 6 jeweils in Z-Richting geradlinig ausgebildet. Bei der Ausführungsform gemäß Figur 6 sind die Referenzflächen 5' und 6' ballig. Figuren 7 und 8 zeigen die Referenzflächen 5'' und 6'' in einer Ausführung, bei der lediglich der Mittelbereich der Referenzflächen in Z-Richtung geradlinig ist, während sich nach oben und unten jeweils Fasen anschließen.

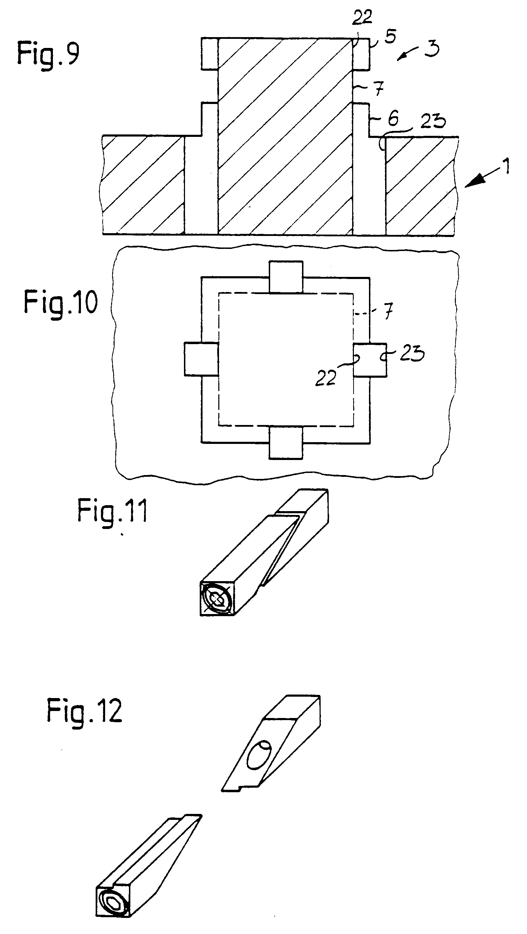

Figuren 9 und 10 zeigen eine im Grundriß quadratische Erhebung 3, welche jeweils im Zentrum der umlaufend angeordneten Referenzflächen 5 und 6 eine quadratische Halbnut 22 aufweisen, welche sich im Grundteil 1 in einer quadratischen Durchgangsnut 23 fortsetzt.

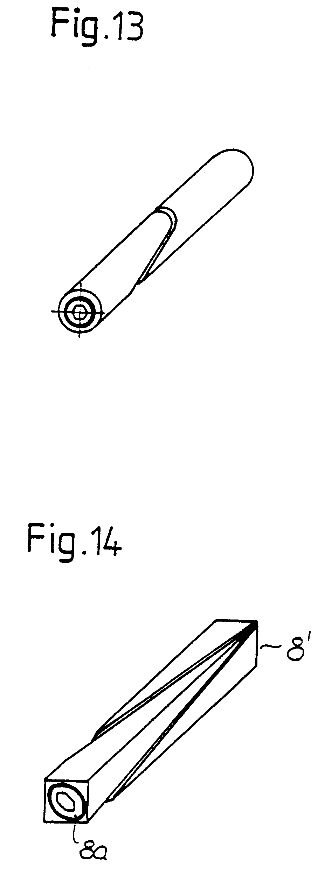

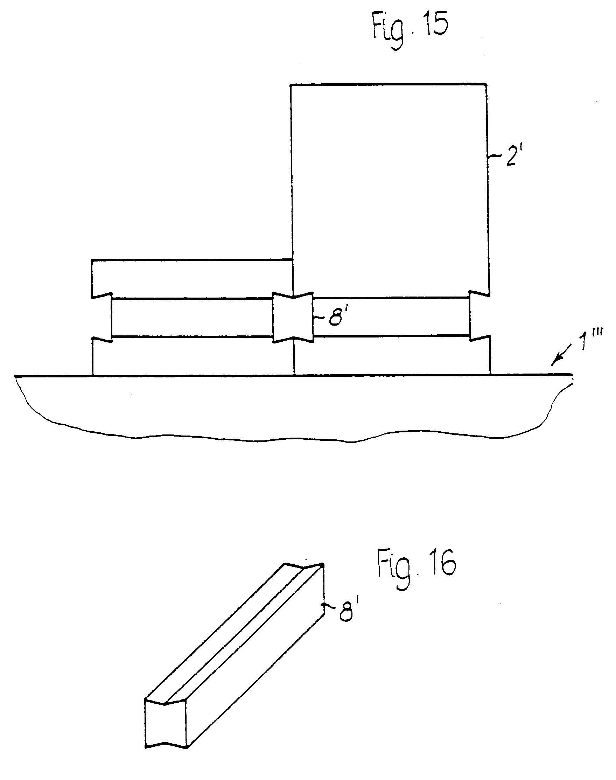

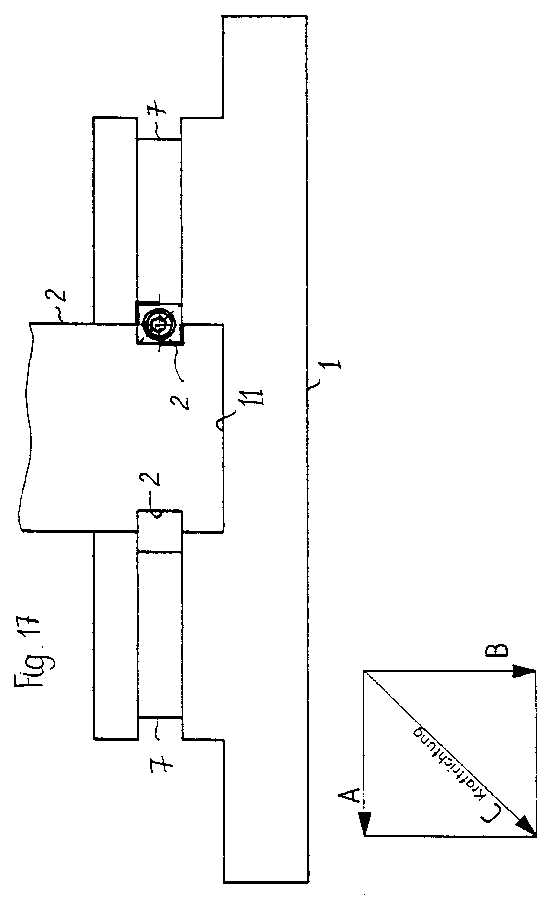

In den Figuren 11, 12, 13, 14 und 16 sind unterschiedliche Formen von als Spannkeilen ausgebildeten Verbindungselementen dargestellt. Die Form der Verbindungselemente korrespondiert dabei mit der Form der Nuten, die einerseits in den Erhebungen 3 des Grundteils vorgesehen sind und den auf gleicher Höhe liegenden Nuten in den Spannteilen 2, welche auf dem Grundteil festgelegt werden sollen. In Figur 17 ist die Anordnung eines Spannteils 2 zwischen zwei einander gegenüberliegenden Erhebungen 3 dargestellt. Das Spannteil 2 ist dort nur teilweise dargestellt. Es liegt mit seiner unteren Stirnfäche auf der Referenzfläche 11 des Grundteils 1 auf und besitzt an seinen Seitenflächen Rechtecknuten 2c, die in gleicher Höhe wie die gegenüberliegenden Nuten 7 verlaufen. Als Verbindungselemente zwischen dem Spannteil 2 und den Erhebungen 3 sind im dargestellten Ausführungsbeispiel Spannkeile 8' verwendet, die durch Anziehen der axial sich erstreckenden Spannschraube 8a in diagonaler Kraftrichtung C (vgl. Skizze in Figur 17) spannen.

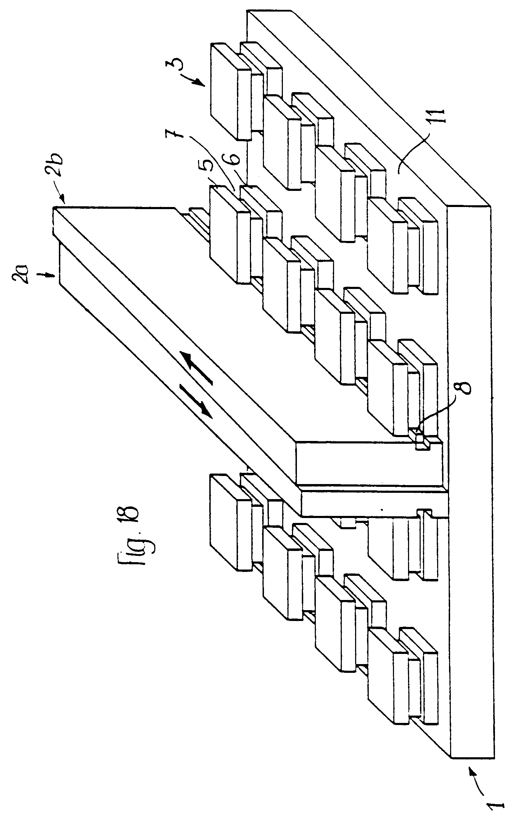

Bei der Ausführungsform gemäß Figur 18 besteht das Spannteil aus zwei keilförmigen, sich ergänzenden Platten 2a und 2b. Durch entsprechendes Verschieben in Längsrichtung werden die Platten 2a und 2b in X-Y-Ebene zwischen den einander gegenüberliegenden Referenzflächen der einander gegenüberliegenden Erhebungen 3 fixiert. Eine Sicherung gegen Bewegung in Z-Richtung erfolgt über die als Stäbe 8 ausgebildeten durchgehenden Verbindungselemente, welche in die jeweils einander gegenüberliegenden Nuten von Spannteilhälften und Erhebungen 3 eingeschoben sind.

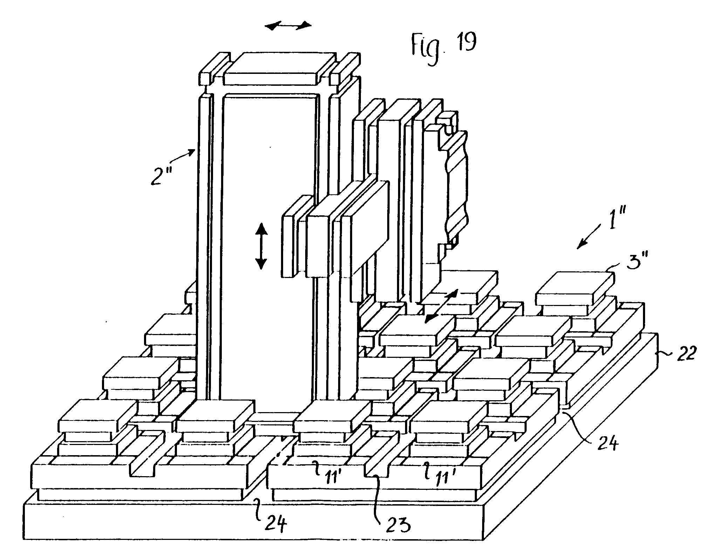

Bei der Ausführungsform gemäß Figur 19 sind vier Grundteile, welche jeweils vier Erhebungen 3'' aufweisen, auf einer gemeinsamen Trägerplatte 22 angeordnet, welche beispielsweise ein Maschinentisch sein kann. Die Anordnung der vier Grundteile 1'' ist derart vorgenommen, daß ein völlig gleichmäßiges Raster zwischen allen sechzehn Erhebunger 3'' entsteht. Unterhalb der Referenzfläche 11' sind auf jedem Grundteil 1'' zwei sich kreuzende Kanäle 23 vorgesehen. Zwischen den vier Grundteilen 1'' werden zwei sich kreuzende, noch tiefer liegende Kanäle 24 gebildet. Durch die Kanäle 23 und 24 können Bearbeitungsrückstände, Bohrwasser, Schneidöl und dergleichen abgeführt werden.

Das Spannteil 2'', welches über übliche Verbindungselemente, beispielsweise Stäbe, zwischen den Erhebungen 3'' festgelegt werden kann, ist seinerseits zusätzlich mit in Z-Richtung sich erstreckenden Nuten und passenden Referenzflächen versehen. An dem Spannteil 2'' können andere Spannteile oder Anbauteile in gleicher oder ähnlicher Weise festgelegt werden, wie das Spannteil 2'' selbst auf dem Grundteil 1''.

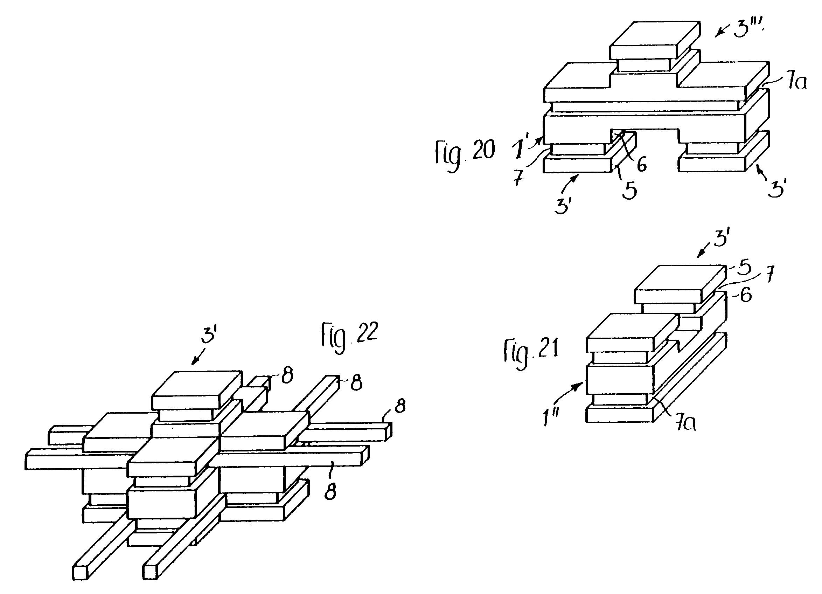

Figur 20 zeigt ein Grundteil 1', welches nach unten weisende Erhebungen 3' aufweist und eine nach oben weisende Erhebung 3'''. Alle Erhebungen besitzen die bereits beschriebenen Referenzflächen 5 und 6 sowie die dazwischen verlaufenden Nuten 7.

In Figur 21 ist ein weiteres Grundteil 1'' dargestellt, welches zwei Erhebungen 3' aufweist. Unterhalb der Referenzfläche 6 befindet sich eine Nut 7a.

In Figur 22 ist dargestellt, wie die beiden Grundteile 1' und 1'' miteinander verbaut sind, und zwar unter Zuhilfenahme von als Verbindungselemente dienenden Stäben 8. Bei dieser Anordnung ist es möglich, das eine Element 1' als Grundteil anzusehen und das zweite Element 1'' als Spannteil. In diesem Sinne ist auch bei dieser Lösung ein Grundteil 1' mit einem Spannteil 1'' über Verbindungselemente 8 miteinander verbunden.

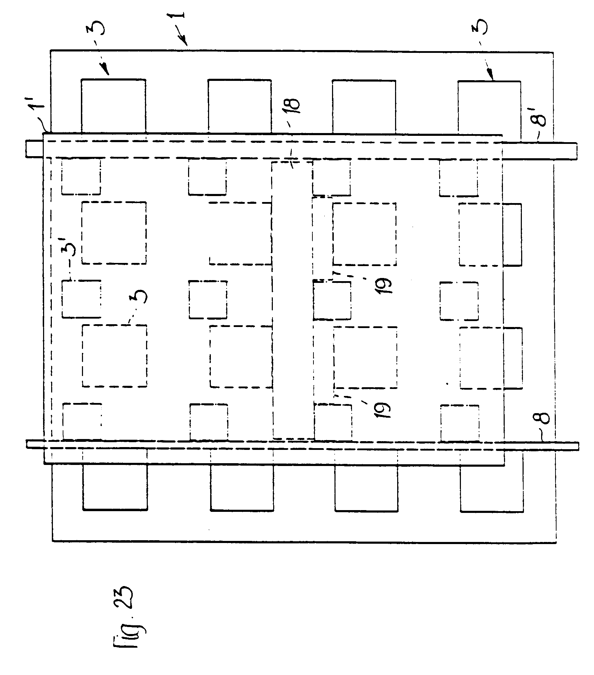

Figur 23 zeigt eine weitere Gestaltungsmöglichkeit, bei der ein Grundteil 1 mit Erhebungen 3 vorgesehen ist. Auf diesem Grundteil 1 ist ein Grundteil 1' mit Erhebungen 3' fixiert. Die Fixierung erfolgt dabei über Verbindungselemente 8 und 8' sowie über Fixierstücke 18 und 19.

Das erfindungsgemäße Elementsystem ist universell einsetzbar. Mit großem Vorteil ist es auch zur Bildung von Spielzeugelementen und Spielzeugbausteinen geeignet.

## Patentansprüche

1. Elementsystem, insbesondere zum Aufbau von Vorrichtungen für das Halten, Spannen und/oder Positionieren von Werkstücken, vorzugsweise auf Maschinen, mit einem sich in X-Y-Ebene erstreckenden Grundteil (1), mindestens einem auf diesem in verschiedenen wählbaren Positionen befestigbaren Spannteil (2) und Verbindungselementen, wobei das Grundteil regelmäßig in der X-Y-Ebene in einem Raster angeordnete Erhebungen (3) mit als Auflageflächen (4) ausgebildeten Oberflächen aufweist, welche jeweils in Z-Richtung weisende Referenzflächen besitzen, wobei die Erhebungen innerhalb der Referenzflächen zur Aufnahme der Verbindungselemente vorgesehene, in gleicher Höhe liegende Hinterschneidungen aufweisen und die Verbindungselemente sich zwischen den Erhebungen und dem Spannteil erstrecken,
dadurch gekennzeichnet,
daß an jeder Erhebung (3) jeweils zwei mit Abstand voneinander angeordnete und durch die Hinterschneidung getrennte, in Z-Richtung weisende Referenzflächen (5; 6) übereinander vorgesehen sind.

2. Elementsystem nach Anspruch 1,
dadurch gekennzeichnet,
daß die Referenzflächen (5; 6) miteinander fluchten.

3. Elementsystem nach Anspruch 1 oder 2,
dadurch gekennzeichnet,
daß die Erhebungen (3) in Draufsicht mehreckig ausgebildet sind.

4. Elementsystem nach Anspruch 1 oder 2,
dadurch gekennzeichnet,
daß die Erhebungen (3) in Draufsicht rund sind.

5. Elementsystem nach einem der Ansprüche 1 bis 4,
dadurch gekennzeichnet,
daß die Verbindungselemente (8) als Flachkörper ausgebildet sind, die auf zwei einander gegenüberliegenden Seitenflächen eine Kontur und Abmessungen aufweisen, welche entsprechend der Kontur und den Abmessungen der Hinterschneidungen in den Erhebungen (3) ausgebildet sind.

6. Elementsystem nach einem der Ansprüche 1 bis 5,
dadurch gekennzeichnet,
daß die Hinterschneidungen als an den Erhebungen rings umlaufende Nuten (7) ausgebildet sind.

7. Elementsystem nach einem der Ansprüche 1 bis 6,
dadurch gekennzeichnet,
daß die Nuten (7) einen rechteckigen Querschnitt aufweisen.

8. Elementsystem nach einem der Ansprüche 1 bis 7,
dadurch gekennzeichnet,
daß die Nuten (7'') einen halbrunden Querschnitt aufweisen.

9. Elementsystem nach einem der Ansprüche 1 bis 8,
dadurch gekennzeichnet,
daß die Nuten (7') einen V-förmigen Querschnitt aufweisen.

10. Elementsystem nach einem der Ansprüche 1 bis 9,
dadurch gekennzeichnet,
daß die Verbindungselemente als Stäbe (8) ausgebildet sind, deren Querschnitt die einander gegenüberliegenden Nuten von Erhebungen (3) und Spannteil zumindest im wesentlichen ausfüllt.

11. Elementsystem nach Anspruch 10,
dadurch gekennzeichnet,
daß die Breite der Stäbe (8) dem Abstand der einander gegenüberliegenden Nutgründe benachbarter Erhebungen (3) und Spannteile (2) entspricht.

12. Elementsystem nach einem der Ansprüche 1 bis 11,
dadurch gekennzeichnet,
daß die Erhebungen (3) mehrere in Z-Richtung übereinander angeordnete, zueinander parallel verlaufende Nuten aufweisen.

13. Elementsystem nach einem der Ansprüche 1 bis 12,
dadurch gekennzeichnet,
daß die Referenzflächen (5; 6) in Z-Richtung geradlinig ausgebildet sind.

14. Elementsystem nach einem der Ansprüche 1 bis 13,
dadurch gekennzeichnet,
daß die Referenzflächen (5'; 6') in Z-Richtung ballig ausgebildet sind.

15. Elementsystem nach einem der Ansprüche 1 bis 14,
dadurch gekennzeichnet,
daß die Referenzflächen (5''; 6'') in Z-Richtung mehrkantig ausgebildet sind.

16. Elementsystem nach einem der Ansprüche 1 bis 15,
dadurch gekennzeichnet,
daß die Verbindungselemente (8') in den Nuten verspannbar sind.

17. Elementsystem nach einem der Ansprüche 1 bis 16,
dadurch gekennzeichnet,
daß die Verbindungselemente (8') mehrteilig ausgebildet sind und die verschiedenen Teile, welche aneinander anliegende Schrägflächen aufweisen, mittels einer Schraube (8a) in Längsrichtung zum Verspannen in den Nuten verschiebbar sind.

18. Elementsystem nach einem der Ansprüche 1 bis 17,
dadurch gekennzeichnet,
daß das Spannteil (2; 2') Nuten in Höhe der Nuten (7) der Erhebungen (3) aufweist und zur Anlage an die Referenzflächen (5; 6) ausgebildet ist.

19. Elementsystem nach einem der Ansprüche 1 bis 18,
dadurch gekennzeichnet,
daß der Abstand zwischen Referenzflächen (5; 6) benachbarter Erhebungen (3) dem Abstand der Referenzflächen einer Erhebung (3) entspricht oder ein geradzahliges Vielfaches davon ist.

20. Elementsystem nach einem der Ansprüche 1 bis 19,
dadurch gekennzeichnet,
daß das Grundteil (1) zwischen den Erhebungen (3) eine parallel zu den Auflageflächen (4) der Erhebungen sich erstreckende Referenzfläche (11) aufweist.

## Claims

1. Element system, more particularly for constructing apparatus for holding, tensioning and/or positioning workpieces, preferably on machines, with a base part (1) extending in the X-Y plane, at least one tension part (2) fixable on same in various selected positions, and connecting elements wherein the base part has protrusions (3) arranged in a regular grid pattern in the X-Y plane and provided with surfaces forming bearing surfaces (4) which each have reference faces pointing in the Z-direction wherein the protrusions have inside the reference faces rear cut areas lying at the same level and serving to hold the connecting elements and wherein the connecting elements extend between the protrusions and tension part, characterised in that on each protrusion (3) there are two reference faces (5,6) arranged at a distance one above the other , pointing in the Z-direction and separated by the rear cut section.

2. Element system according to claim 1
characterised in that the reference faces (5,6) align with one another.

3. Element system according to claim 1 or 2
characterised in that the protrusions (3) are multi-angular in plan view.

4. Element system according to claim 1 or 2
characterised in that the protrusions (3) are round in plan view.

5. Element system according to one of claims 1 to 4 characterised in that the connecting elements (8) are designed as flat bodies which have on two opposing side faces a contour and dimensions designed to correspond with the contour and dimensions of the rear cut sections in the protrusions (3).

6. Element system according to one of claims 1 to 5 characterised in that the rear cut sections are formed as grooves (7) running in a ring round the protrusions.

7. Element system according to one of claims 1 to 5 characterised in that the grooves (7) have a rectangular cross-section.

8. Element system according to one of claims 1 to 7 characterised in that the grooves (7'') have a semi-circular cross-section.

9. Element system according to one of claims 1 to 8 characterised in that the grooves (7') have a V-shaped cross-section.

10. Element system according to one of claims 1 to 9 characterised in that the connecting elements are designed as rods (8) whose cross-section fills out at least substantially the opposing grooves of the protrusions (3) and tension part.

11. Element system according to claim 10 characterised in that the width of the rods (8) corresponds to the spacing between the opposing groove bases of adjoining protrusions (3) and tension parts (2).

12. Element system according to one of claims 1 to 11 characterised in that the protrusions (3) have several grooves running parallel to each other and mounted one above the other in the Z-direction.

13. Element system according to one of claims 1 to 12 characterised in that the reference faces (5;6) are designed rectilinear in the Z-direction.

14. Element system according to one of claims 1 to 13 characterised in that the reference faces (5';6') are ball-shaped in the Z-direction.

15. Element system according to one of claims 1 to 14 characterised in that the reference faces (5'';6'') are multi-angled in the Z-direction.

16. Element system according to one of claims 1 to 15 characterised in that the connecting elements (8') can be tensioned in the grooves.

17. Element system according to one of claims 1 to 16 characterised in that the connecting elements (8') are multi-part and the different parts which have adjoining inclined faces can be displaced by means of a screw (8a) in the longitudinal direction for tensioning in the grooves.

18. Element system according to one of claims 1 to 17 characterised in that the tension part (2;2') has grooves level with the grooves (7) of the protrusions (3) and is designed to adjoin the reference faces (5;6).

19. Element system according to one of claims 1 to 18 characterised in that the distance between reference faces (5;6) of adjoining protrusions (3) corresponds to the distance between the reference faces of one protrusion (3) or is an even-numbered multiple thereof.

20. Element system according to one of claims 1 to 19 characterised in that the base part (1) between the protrusions (3) has a reference face (11) extending parallel to the bearing faces (4) of the protrusions.

## Revendications

1. Système d'éléments, destiné tout particulièrement au maintien, au serrage et/ou au positionnement de pièces à usiner, préférentiellement sur des machines, ce système d'éléments comprenant une pièce de base (1) s'étendant sur le plan X-Y et une pièce de serrage (2), au moins, pouvant être fixée dans diverses positions sur la pièce de base (1), ainsi que des éléments de raccordement, la pièce de base (1) présentant des élévations (3) disposées régulièrement en réseau sur le plan X-Y et présentant des surfaces conçues sous forme de surfaces d'appui (4) avec surfaces de référence dirigées dans le sens Z et les surfaces de référence des élévations étant contre-dépouillées à la même hauteur en vue d'accueillir les éléments de raccordement placés entre les élévations et la pièce de serrage,
caractérisé en ce que
chaque élévations (3) est pourvue de deux surfaces de référence (5; 6) qui, dirigées dans le sens Z, sont disposées, à intervalle, l'une au-dessus de l'autre et séparées par la contre-dépouille.

2. Système d'éléments selon la revendication 1,
caractérisé en ce que
les surfaces de référence (5; 6) sont en alignement.

3. Système d'éléments selon la revendication 1 ou 2,
caractérisé en ce
les élévations (3), vues d'en haut, sont polygonales.

4. Système d'éléments selon la revendication 1 ou 2,
caractérisé en ce que
les élévations (3), vues d'en haut, sont rondes.

5. Système d'éléments selon l'une des revendications 1 à 4,
caractérisé en ce que
les éléments de raccordement (8) sont conçus sous forme de corps plats présentant, sur deux surfaces latérales opposées, un contour et des dimensions qui correspondent au contour et aux dimensions des contre-dépouilles des élévations (3).

6. Système d'éléments selon à l'une des revendications 1 à 5,
caractérisé en ce que
les contre-dépouilles sont conçues sous forme de rainures (7) entourant les élévations.

7. Système d'éléments selon l'une des revendications 1 à 7,
caractérisé en ce que
les rainures (7) présentent une section transversale rectangulaire.

8. Système d'éléments selon l'une des revendications 1 à 7,
caractérisé en ce
les rainures (7'') présentent une section transversale demi-circulaire.

9. Système d'éléments selon l'une des revendications 1 à 8,
caractérisé en ce que
les rainures (7') présentent une section transversale en V.

10. Système d'éléments selon l'une des revendications 1 à 9,
caractérisé en ce que
les éléments de raccordement sont conçus sous forme de barres (8) dont la section transversale remplit, au moins en grande partie, les rainures de la pièce de serrage et des élévations (3) se faisant face.

11. Système d'éléments selon la revendication 10,
caractérisé en ce que
la largeur des barres (8) correspond à l'intervalle entre les fonds des rainures opposées d'élévations (3) voisines et pièces de serrage (2).

12. Système d'éléments selon l'une des revendications 1 à 11,
caractérisé en ce que
les élévations (3) présentent plusieurs rainures parallèles, superposées dans la direction Z.

13. Système d'éléments selon l'une des revendications 1 à 12,
caractérisé en ce
les surfaces de référence (5; 6) sont rectilignes dans la direction Z.

14. Système d'éléments selon l'une des revendications 1 à 13,
caractérisé en ce que
les surfaces de référence (5'; 6') sont convexes dans la direction Z.

15. Système d'éléments selon l'une des revendications 1 à 14,
caractérisé en ce que
les surfaces de référence (5''; 6'') son polygonales dans la direction Z.

16. Système d'éléments selon l'une des revendications 1 à 15,
caractérisé en ce que
les éléments de raccordement (8') sont peuvent être serrés dans les rainures.

17. Système d'éléments selon l'une des revendications 1 à 16,
caractérisé en ce que
les éléments de raccordement (8') sont composés de plusieurs pièces qui présentent des surfaces obliques adjacentes et peuvent être glissées et serrés dans les rainures à l#aide d'une vis de serrage (8a).

18. Système d'éléments selon l'une des revendications 1 à 17,
caractérisé en ce que
la pièce de serrage (2; 2') est pourvue de rainures situées à la hauteur des rainures (7) des élévations (3) et est conçue pour porter contre les surfaces de référence (5; 6).

19. Système d'éléments selon l'une des revendications 1 à 18,
caractérisé en ce
la distance séparant les surfaces de référence (5; 6) d'élévations (3) voisines correspond à la distance entre les surfaces de référence d'une élévation (3) ou à un multiple d'ordre pair de celle-ci.

20. Système d'éléments selon l'une des revendications 1 à 19,
caractérisé en ce que
la pièce de base (1) présente, entre les élévations (3), une surface de référence (11) parallèle aux surfaces d'appui (4) des élévations.
